# EUROPÄISCHE PATENTSCHRIFT

(11) **EP 3 730 821 B1**
(45) Veröffentlichungstag und Bekanntmachung des Hinweises auf die Patenterteilung: **05.07.2023**
(21) Anmeldenummer: 19465529.6
(22) Anmeldetag: 23.04.2019
(51) Int. Cl.: F16K 5/06, F01P 7/14, F16K 5/20, F16K 11/087

(54) **MEHRWEGEVENTIL**
MULTI-PORT VALVE
VANNE MULTI-VOIES

(43) Veröffentlichungstag der Anmeldung: 28.10.2020
(73) Patentinhaber: Vitesco Technologies GmbH, 93055 Regensburg (DE)
(72) Erfinder: Popa, Alexandru, 240048 Rimnicu Vilcea (RO); Pop, Daniel-Marius, 437315 Suciu de Sus (RO); Plaeru, George, 300620 Timisoara (RO); Belin, Cosmin, 300282 Timisoara (RO)
(74) Vertreter: Vitesco Technologies

(56) Entgegenhaltungen:
- EP-A1- 3 561 346
- EP-A1- 3 775 638
- EP-A2- 1 108 867
- DE-A1-102018 124 112
- DE-T5-112016 001 026
- US-A- 3 473 554
- US-A1- 2011 309 280

## Beschreibung

Die vorliegende Erfindung betrifft ein Mehrwegeventil, insbesondere ein Kühlwasser-Ventil für ein Kraftfahrzeug bzw. eines Kraftfahrzeugs, sowie ein Verfahren zum Betätigen des Mehrwegeventils.

Die DE11 2016 001 026 T5 betrifft ein Durchfluss-Steuerventil, das mit Dichtelementen vorgesehen ist, die radial zwischen einem Gehäuse und einem Ventilkörper angeordnet sind, der drehbar in dem Gehäuse gelagert ist, wobei Dichtelemente, welche den Raum radial zwischen dem Gehäuse und dem Ventilkörper durch Gleiten gegen die äußere Umfangsfläche des Ventilkörpers abdichten, konkave Niveauunterschiedsteile, die niedriger ausgenommen sind als Dichtgleitkontaktflächen, welche die äußeren Umfangsflächen von den Dichtgleitteilen und Teilungslinien innerhalb der Niveauunterschiedsteile vorgesehen sind.

Die US 2011/309280 A1 betrifft ein Kugelventil, das einen Ventilkörper mit einem proximalen und einem distalen Abschnitt, eine Sitzanordnung, die durch den Ventilkörper zusammengedrückt wird, eine Durchflussregelkugel und einen Aktuator zum Betätigen der Durchflussregelkugel zwischen einer offenen und einer geschlossenen Position hat, wobei die Durchflussregelkugel einen Kugelkörper mit einer Außenfläche aufweist, die mindestens eine Schulter und einen Hals aufweist, wobei die mindestens eine Schulter einen größeren Radius als der Hals aufweist. Die EP 1 108 867 A2 betrifft ein Dreiwegeventil für einen Kühl-/Heizkreislauf einer Brennkraftmaschine, dessen Drosselkörper elektrisch in Abhängigkeit von Betriebsparametern und Umgebungsparametern ansteuerbar ist.

Die DE 10 2018 124 112 betrifft eine dynamische Dichtungsanordnung mit einem Federelement und einem Dichtelement, die in einer Dichtungskammer in der Einlassöffnung oder der Auslassöffnung angeordnet ist, wobei das Federelement einen Endabschnitt des Dichtelements in die Ventilkammer vorspannt, ein Ventilelement eine teilweise sphärische Außenfläche mit einem ausgesparten Nockenmerkmal beinhaltet, das sich von der Außenfläche erstreckt, und eine Ventilöffnung, die in der Außenfläche angeordnet ist, wobei während des Zusammenbaus des Ventilelements in der Ventilkammer das ausgesparte Nockenmerkmal mit dem Endabschnitt des Dichtungselements ausgerichtet ist und das Ventilelement gedreht wird, um die Außenfläche des Ventilelements mit dem Endabschnitt des Dichtungselements in Eingriff zu bringen.

Die nachveröffentlichte, d.h. unter Artikel 54(3) EPÜ fallende, EP 3 561 346 A1 betrifft eine Dichtung zur Verwendung in einem Fluidventil und zur Unterteilung einer Ventilkammer zwischen zwei benachbarten Anschlüssen des Fluidventils, in welcher ein steilbarer Ventilkörper des Fluidventils angeordnet ist, wobei die Dichtung die Ventilkammer, die durch ein Ventilgehäuse und den stellbaren Ventilkörper gebildet wird, in eine erste Ventilkammer und eine zweite Ventilkammer unterteilt, und zwar abhängig von einer Stellung des Ventilkörpers, um einen Fluss eines Fluides zwischen der ersten Ventilkammer und der zweiten Ventilkammer abhängig von der Stellung des Ventilkörpers zu unterbinden, wobei die Dichtung einen ventilgehäuseseitigen, elastisch verformbaren Verankerungsabschnitt zum Einstecken in eine nutförmige Ventilgehäuseaussparung und zur dynamisch dichtenden Anlage gegen die Ventilgehäuseaussparung sowie einen ventilkörperseitigen Abschnitt zur statisch dichtenden Anlage gegen den Ventilkörper aufweist. Weiterhin betrifft diese EP 3 561 346 A1 eine Dichtungsanordnung mit einer solchen Dichtung sowie ein Mehrwege-Fluidventil mit einer solchen Dichtungsanordnung.

Die nachveröffentlichte, d.h. unter Artikel 54(3) EPÜ fallende, EP 3 775 638 A1 betrifft eine Dichtungsanordnung zur Verwendung in einem Fluidventil, insbesondere in Gestalt eines Kühlwasserventils, insbesondere zur Verwendung in einem Fahrzeug, umfassend: einen stellbaren Ventilkörper zum Öffnen und Schließen mindestens eines Anschlusses des Fluidventils sowie mindestens eine Dichtung zur dichtenden Anlage gegen den Ventilkörper einerseits und zur dichtenden Anlage gegen ein Ventilgehäuse des Fluidventils andererseits, wobei am Ventilkörper abschnittsweise mindestens eine Erhebung aus der Ventilkörpermantelfläche zur Aktivierung der Dichtung in einer Schließstellung des Fluidventils angeformt ist.

Aufgabe der vorliegenden Erfindung ist es, ein Mehrwegeventil zu verbessern.

Diese Aufgabe wird durch ein Mehrwegeventil mit den Merkmalen des Anspruchs 1 gelöst. Ansprüche 8, 9 stellen ein Kraftfahrzeug mit wenigstens einem hier beschriebenen Mehrwegeventil bzw. ein Verfahren zum Betätigen eines hier beschriebenen Mehrwegeventils unter Schutz. Vorteilhafte Ausführungsformen der Erfindung sind Gegenstand der Unteransprüche.

Nach einer Ausführung der vorliegenden Erfindung weist ein Mehrwegeventil ein ein- oder mehrteiliges Gehäuse mit zwei oder mehr, bevorzugt wenigstens oder genau drei oder vier, Anschlüssen sowie ein ein- oder mehrteiliges Steuerelement auf, das selektiv einen oder mehrere dieser Anschlüsse absperrt bzw. hierzu vorgesehen, insbesondere eingerichtet ist bzw. verwendet wird.

Insbesondere hierzu ist bzw. wird das Steuerelement nach einer Ausführung der vorliegenden Erfindung drehbar, insbesondere um eine Rotationsachse und/oder in verschiedene Stellungen, drehbar, in einer Aussparung des Gehäuses angeordnet, in einer Ausführung gelagert.

Bei solchen Mehrwegeventilen kann die vorliegende Erfindung mit besonderem Vorteil verwendet werden.

Erfindungsgemäß weist eine Außenkontur des Steuerelements, in einer Ausführung eine, in einer Weiterbildung konvexe bzw. nach außen gewölbte, (radiale) Mantelfläche, einen Kompressionsabschnitt auf, der in wenigstens einer ersten Stellung des Steuerelements eine erste Dichtung, die an einem ersten dieser Anschlüssen angeordnet ist, in einer Ausführung wenigstens teilweise elastisch, komprimiert bzw. derart bzw. hierzu ausgebildet bzw. eingerichtet ist bzw. verwendet wird. Erfindungsgemäß sperrt das Steuerelement in der ersten Stellung den ersten Anschluss ab bzw. ist derart bzw. hierzu ausgebildet bzw. eingerichtet bzw. wird hierzu verwendet.

Hierdurch kann in einer Ausführung diese Absperrung verbessert werden.

Erfindungsgemäß weist die Außenkontur des Steuerelements einen Dekompressionsabschnitt auf, der einen kleineren Radius aufweist als der Kompressionsabschnitt und in wenigstens einer weiteren Stellung des Steuerelements, in der das Steuerelement den ersten Anschluss in einer Ausführung nicht absperrt, der ersten Dichtung gegenüberliegt bzw. zugewandt ist, so dass das Steuerelement in dieser weiteren Stellung die erste Dichtung weniger komprimiert als in der ersten Stellung, bzw. der derart bzw. hierzu ausgebildet bzw. eingerichtet ist bzw. verwendet wird.

Hierdurch wird in einer Ausführung die erste Dichtung bei Nichtbedarf entlastet.

Dadurch kann in einer Ausführung die Lebensdauer, Zuverlässigkeit und/oder Dichtwirkung der Dichtung erhöht und/oder eine Bedienkraft zum Verstellen des Mehrwegeventils reduziert werden.

Der Radius des Kompressionsabschnitts bzw. der (kleinere) Radius des Dekompressionsabschnitts ist in einer Ausführung ein(e), insbesondere maximale(r), minimale(r) oder mittlere(r), Entfernung bzw. Abstand des entsprechenden Abschnitts bzw. der Außenkontur zur Rotationsachse des Steuerelements in wenigstens einem Querschnitt, in einer Ausführung in wenigstens einem Querschnitt senkrecht zur Rotationsachse, wobei dieser Querschnitt in einer Ausführung auch die entsprechende Dichtung schneidet.

Erfindungsgemäß stützt der Dekompressionsabschnitt in dieser weiteren Stellung des Steuerelements die erste Dichtung gegen das Gehäuse ab bzw. ist derart bzw. hierzu ausgebildet bzw. eingerichtet bzw. wird hierzu verwendet.

Dadurch kann in einer Ausführung das Risiko eines unerwünschten Herausfallens der ersten Dichtung aus einer Aufnahme reduziert und dadurch in einer Ausführung die Funktion und/oder Zuverlässigkeit des Mehrwegeventils verbessert werden.

Zusätzlich oder alternativ komprimiert in einer Ausführung der Dekompressionsabschnitt in dieser weiteren Stellung die erste Dichtung nicht bzw. ist derart bzw. hierzu ausgebildet bzw. eingerichtet.

Hierdurch wird in einer Ausführung die erste Dichtung besonders stark entlastet.

Dadurch kann in einer Ausführung die Lebensdauer, Zuverlässigkeit und/oder Dichtwirkung der Dichtung weiter erhöht und/oder eine Bedienkraft zum Verstellen des Mehrwegeventils weiter reduziert werden.

Erfindungsgemäß komprimiert der Kompressionsabschnitt in wenigstens einer zweiten Stellung des Steuerelements eine zweite Dichtung, die an einem zweiten der Anschlüsse angeordnet ist, bzw. ist derart bzw. hierzu ausgebildet bzw. eingerichtet bzw. wird hierzu verwendet. In einer Weiterbildung sperrt das Steuerelement in der zweiten Stellung den zweiten Anschluss ab bzw. ist derart bzw. hierzu ausgebildet bzw. eingerichtet bzw. wird hierzu verwendet.

Hierdurch kann in einer Ausführung diese Absperrung verbessert werden.

In einer Ausführung komprimiert das Steuerelement die zweite Dichtung in dieser zweiten Stellung stärker als in wenigstens einer anderen Stellung des Steuerelements, in einer Ausführung stärker als in der ersten Stellung des Steuerelements, bzw. ist derart bzw. hierzu ausgebildet bzw. eingerichtet bzw. wird hierzu verwendet. In einer Weiterbildung sperrt das Steuerelement in dieser anderen Stellung den zweiten Anschluss nicht ab bzw. ist derart bzw. hierzu ausgebildet bzw. eingerichtet bzw. wird hierzu verwendet. Zusätzlich oder alternativ liegt in einer Ausführung, insbesondere hierzu, der Dekompressionsabschnitt in dieser anderen Stellung der zweiten Dichtung gegenüber.

Hierdurch wird in einer Ausführung die zweite Dichtung bei Nichtbedarf entlastet. Dadurch kann in einer Ausführung die Lebensdauer, Zuverlässigkeit und/oder Dichtwirkung der Dichtung erhöht und/oder eine Bedienkraft zum Verstellen des Mehrwegeventils reduziert werden.

In einer Ausführung stützt der Dekompressionsabschnitt in dieser anderen Stellung des Steuerelements, in einer Ausführung also in der ersten Stellung, die zweite Dichtung gegen das Gehäuse ab bzw. ist derart bzw. hierzu ausgebildet bzw. eingerichtet bzw. wird hierzu verwendet.

Dadurch kann in einer Ausführung das Risiko eines unerwünschten Herausfallens der zweiten Dichtung aus einer Aufnahme reduziert und dadurch in einer Ausführung die Funktion und/oder Zuverlässigkeit des Mehrwegeventils verbessert werden.

Zusätzlich oder alternativ komprimiert in einer Ausführung der Dekompressionsabschnitt in dieser anderen Stellung die zweite Dichtung nicht bzw. ist derart bzw. hierzu ausgebildet bzw. eingerichtet.

Hierdurch wird in einer Ausführung die zweite Dichtung besonders stark entlastet. Dadurch kann in einer Ausführung die Lebensdauer, Zuverlässigkeit und/oder Dichtwirkung der Dichtung weiter erhöht und/oder eine Bedienkraft zum Verstellen des Mehrwegeventils weiter reduziert werden.

Insbesondere kann also das Steuerelement bzw. dessen Außenkontur derart ausgebildet sein, dass der Kompressionsabschnitt in der ersten Stellung die erste Dichtung und in der zweiten Stellung die zweite Dichtung, insbesondere wenigstens teilweise elastisch, komprimiert, und der Dekompressionsabschnitt in der ersten Stellung die zweite Dichtung und in der zweiten Stellung die erste Dichtung demgegenüber entlastet bzw. weniger, gegebenenfalls gar nicht, komprimiert.

In einer Ausführung wird bei Verstellung des Steuerelements von der ersten in die zweite Stellung anstelle des Kompressionsabschnitts der Dekompressionsabschnitt vor dem ersten Anschluss und anstelle des Dekompressionsabschnitts der Kompressionsabschnitt vor dem zweiten Anschluss angeordnet und dadurch eine Kompression der ersten Dichtung durch das Steuerelement, vorzugsweise kontinuierlich, reduziert bzw. eine Kompression der zweiten Dichtung durch das Steuerelement, vorzugsweise kontinuierlich und/oder gegenläufig, verstärkt und umgekehrt bei Verstellung des Steuerelements von der zweiten in die erste Stellung anstelle des Dekompressionsabschnitts der Kompressionsabschnitt vor dem ersten Anschluss und anstelle des Kompressionsabschnitts der Dekompressionsabschnitt vor dem zweiten Anschluss angeordnet und dadurch eine Kompression der zweiten Dichtung durch das Steuerelement, vorzugsweise kontinuierlich, reduziert bzw. eine Kompression der ersten Dichtung durch das Steuerelement und/oder gegenläufig, verstärkt.

Zusätzlich oder alternativ ist in einer Ausführung, insbesondere in einer Umfangs- bzw. Rotationsrichtung um die Rotationsachse (gesehen) zwischen dem ersten und zweiten Anschluss wenigstens, in einer Ausführung genau, ein weiterer (dritter) der Anschlüsse angeordnet, der in einer Ausführung in der ersten Stellung des Steuerelements mit dem zweiten Anschluss und/oder in der zweiten Stellung des Steuerelements mit dem ersten Anschluss (fluidtechnisch) verbunden ist bzw. kommuniziert.

Bei einer solchen Anschlussanordnung kann die vorliegende Erfindung mit besonderem Vorteil verwendet und/oder ein kompakte(re)s Mehrwegenvetil realisiert werden.

In einer Ausführung komprimiert das Steuerelement in wenigstens einer dritten Stellung des Steuerelements, in der dieses den ersten und zweiten Anschluss in einer Ausführung nicht absperrt, die erste Dichtung weniger als in der ersten Stellung und/oder die zweite Dichtung weniger als in der zweiten Stellung, in einer Ausführung (jeweils) nur abschnittsweise und/oder weniger stark, bzw. ist derart bzw. hierzu ausgebildet bzw. eingerichtet bzw. wird hierzu verwendet.

Hierdurch wird in einer Ausführung die entsprechende Dichtung besonders stark entlastet. Dadurch kann in einer Ausführung die Lebensdauer, Zuverlässigkeit und/oder Dichtwirkung der Dichtung weiter erhöht und/oder eine Bedienkraft zum Verstellen des Mehrwegeventils weiter reduziert werden.

Zusätzlich oder alternativ stützt das Steuerelement in einer Ausführung in wenigstens einer bzw. der dritten Stellung, in der das Steuerelement den ersten und zweiten Anschluss in einer Ausführung nicht absperrt, die erste Dichtung und/oder die zweite Dichtung gegen das Gehäuse ab bzw. ist derart bzw. hierzu ausgebildet bzw. eingerichtet bzw. wird hierzu verwendet.

Dadurch kann in einer Ausführung das Risiko eines unerwünschten Herausfallens der entsprechenden Dichtung aus einer Aufnahme weiter reduziert und dadurch in einer Ausführung die Funktion und/oder Zuverlässigkeit des Mehrwegeventils weiter verbessert werden.

Zusätzlich oder alternativ komprimiert in einer Ausführung das Steuerelement in dieser dritten Stellung die erste Dichtung und/oder die zweite Dichtung nicht bzw. ist derart bzw. hierzu ausgebildet bzw. eingerichtet.

Hierdurch wird in einer Ausführung die entsprechende Dichtung besonders stark entlastet. Dadurch kann in einer Ausführung die Lebensdauer, Zuverlässigkeit und/oder Dichtwirkung der Dichtung weiter erhöht und/oder eine Bedienkraft zum Verstellen des Mehrwegeventils weiter reduziert werden.

In einer alternativen Ausführung komprimiert das Steuerelement (auch) in dieser dritten Stellung die erste Dichtung und/oder die zweite Dichtung bzw. ist derart bzw. hierzu ausgebildet bzw. eingerichtet.

Hierdurch wird in einer Ausführung die Verstellung des Mehrwegeventils und/oder ein zunehmendes Komprimieren der ersten bzw. zweiten Dichtung bei Verstellen in die erste bzw. zweite Stellung verbessert.

Erfindungsgemäß verbindet das Steuerelement in wenigstens einer Stellung, insbesondere der ersten, zweiten und/oder dritten Stellung (jeweils), wenigstens zwei der Anschlüsse über eine Durchgangspassage des Steuerelements, die wenigstens einen, insbesondere seitlichen bzw. radialen, Schlitz aufweist ("geschlitzte Durchgangspassage"), und sperrt wenigstens einen dieser wenigstens zwei Anschlüsse in wenigstens einer anderen Stellung des Steuerelements ab, in einer Weiterbildung verbindet das Steuerelement in wenigstens einer Stellung wenigstens drei der Anschlüsse über die Durchgangspassage, bzw. ist derart bzw. hierzu ausgebildet bzw. eingerichtet bzw. wird hierzu verwendet.

In einer Weiterbildung:
- verbindet das Steuerelement in der zweiten Stellung den ersten Anschluss und wenigstens einen weiteren (dritten) der Anschlüsse, über die Durchgangspassage und sperrt den ersten Anschluss in der ersten Stellung; und/oder
- verbindet das Steuerelement in der ersten Stellung den zweiten Anschluss und wenigstens einen, insbesondere diesen, weiteren (dritten), der Anschlüsse, über die Durchgangspassage und sperrt den zweiten Anschluss in der zweiten Stellung; und/oder
- verbindet das Steuerelement in der dritten Stellung den ersten und zweiten Anschluss und wenigstens einen, insbesondere diesen, weiteren (dritten), der Anschlüsse, über die Durchgangspassage bzw. ist derart bzw. hierzu ausgebildet bzw. eingerichtet bzw. wird hierzu verwendet.

Bei einer solchen Anschlussanordnung kann die vorliegende Erfindung mit besonderem Vorteil verwendet und/oder ein kompakte(re)s Mehrwegenvetil realisiert werden.

Erfindungsgemäß ist der Schlitz ganz oder teilweise in dem Dekompressionsabschnitt angeordnet.

Dadurch kann in einer Ausführung eine Belastung und/oder die Gefahr einer Beschädigung der ersten und/oder zweiten Dichtung durch den Schlitz bzw. dessen (Außen)Kante(n) vorteilhaft reduziert werden.

In einer Ausführung gehen Kompressionsabschnitt und Dekompressionsabschnitt stetig, insbesondere absatzlos, ineinander über, in einer Ausführung reduziert sich der Radius der Außenkontur des Steuerelements vom Kompressionsabschnitt zum Dekompressionsabschnitt kontinuierlich, in einer Ausführung monoton.

Hierdurch kann in einer Ausführung eine lokale Belastung der entsprechenden Dichtung reduziert bzw. vermieden und dadurch die Lebensdauer, Zuverlässigkeit und/oder Dichtwirkung dieser Dichtung weiter erhöht werden.

In einer Ausführung ist die erste Dichtung mehrteilig und/oder ringartig ausgebildet, sie kann insbesondere einen elastischen Ring aufweisen, der in einer Ausführung an einem oder zwischen zwei Stützringen angeordnet ist, wobei sich in einer Ausführung der bzw. einer der Stützring(e) am Gehäuse bzw. ersten Anschluss und/oder der bzw. einer der Stützring(e) am Steuerelement abstützt. Zusätzlich oder alternativ ist in einer Ausführung die zweite Dichtung mehrteilig und/oder ringartig ausgebildet, sie kann insbesondere einen elastischen Ring aufweisen, der in einer Ausführung an einem oder zwischen zwei Stützringen angeordnet ist, wobei sich in einer Ausführung der bzw. einer der Stützring(e) am Gehäuse bzw. zweiten Anschluss und/oder der bzw. einer der Stützring(e) am Steuerelement abstützt.

Bei solchen Dichtungen kann die vorliegende Erfindung mit besonderem Vorteil verwendet werden.

Die vorliegende Erfindung kann, insbesondere aufgrund der thermischen, strömungstechnischen und/oder mechanischen Randbedingungen und/oder Einbausituationen, mit besonderem Vorteil in Kraftfahrzeugen und/oder als Kühlwasser-(Steuer- bzw. Regel)Ventil verwendet werden.

Nach einer Ausführung der vorliegenden Erfindung wird zum Betätigen eines hier beschriebenen Mehrwegeventils das Steuerelement zwischen der ersten Stellung, in der der Kompressionsabschnitt die erste Dichtung komprimiert und in einer Ausführung das Steuerelement den ersten Anschluss absperrt, und einer bzw. der weiteren Stellung verstellt, in der der Dekompressionsabschnitt der ersten Dichtung gegenüberliegt, so dass das Steuerelement die erste Dichtung weniger komprimiert als in der ersten Stellung, wobei in einer Ausführung das Steuerelement den ersten Anschluss in dieser weiteren Stellung nicht absperrt.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisiert:
- Fig.1: ein Mehrwegeventil nach einer Ausführung der vorliegenden Erfindung in einem Längsschnitt,
- Fig.2: das Mehrwegeventil ohne Gehäusedeckel in einer Draufsicht, und
- Fig.3: ein Verfahren zum Betätigen des Mehrwegeventils nach einer Ausführung der vorliegenden Erfindung bzw. verschiedene Stellungen eines Steuerelements des Mehrwegeventils.

Gleiche oder gleichwirkende Merkmale sind über alle Figuren hinweg mit denselben Bezugszeichen gekennzeichnet.

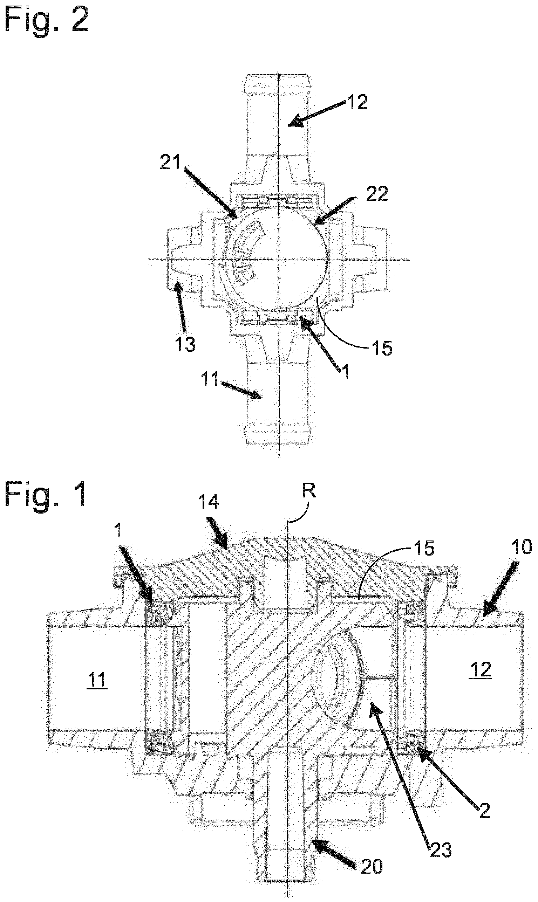

Fig. 1 zeigt ein Mehrwegeventil nach einer Ausführung der vorliegenden Erfindung in einem Längsschnitt, der eine Rotationsachse R enthält.

Das Mehrwegeventil weist ein mehrteiliges Gehäuse mit einem Gehäusegrundkörper 10 und einem Gehäusedeckel 14 auf, der in der Draufsicht der Fig. 2 ausgeblendet ist.

Das Gehäuse weist einen ersten Anschluss 11, einen zweiten Anschluss 12 und einen dritten Anschluss 13 auf.

In einer Aussparung 15 des Gehäuses ist ein Steuerelement 20 zum selektiven Sperren des ersten oder zweiten Anschlusses 11 bzw. 12 um die Rotationsachse D drehbar gelagert.

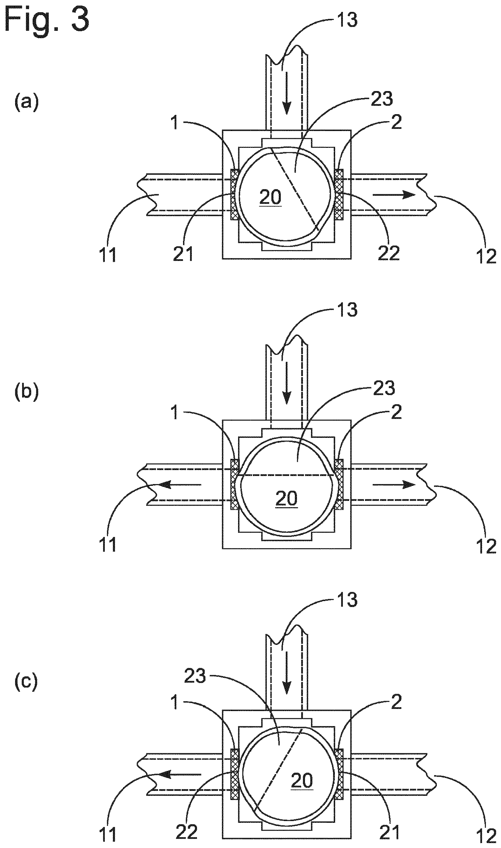

Eine Außenkontur bzw. Mantelfläche des Steuerelements 20 weist einen Kompressionsabschnitt 21 auf, der in einer ersten Stellung (vgl. Fig. 3(a)), in der das Steuerelement 20 den ersten Anschluss 11 absperrt, eine mehrteilige, ringartige erste Dichtung 1 komprimiert, die an dem ersten Anschluss 11 angeordnet ist.

Die Außenkontur des Steuerelements 20 weist einen Dekompressionsabschnitt 22 auf, der in einer zweiten Stellung des Steuerelements 20 (vgl. Fig. 3(c)), in der das Steuerelement den ersten Anschluss 11 nicht absperrt, der ersten Dichtung 1 gegenüberliegt und einen kleineren Radius aufweist als der Kompressionsabschnitt 21, so dass das Steuerelement 20 in dieser zweiten Stellung die erste Dichtung 1 weniger komprimiert als in der ersten Stellung, wobei der Dekompressionsabschnitt 22 in dieser zweiten Stellung des Steuerelements die erste Dichtung 1 weiterhin gegen das Gehäuse abstützt.

In der zweiten Stellung des Steuerelements (vgl. Fig. 3(c)), in der das Steuerelement 20 den zweiten Anschluss 12 absperrt, komprimiert der Kompressionsabschnitt 21 eine mehrteilige, ringartige zweite Dichtung 2, die an dem zweiten Anschluss 12 angeordnet ist.

Dabei komprimiert das Steuerelement 20 die zweite Dichtung 2 in der zweiten Stellung (vgl. Fig. 3(c)) mit seinem Kompressionsabschnitt 21 stärker als in der ersten Stellung (vgl. Fig. 3(a)) mit seinem Dekompressionsabschnitt 22, stützt jedoch mit seinem Dekompressionsabschnitt 22 auch in der ersten Stellung die zweite Dichtung 2 gegen das Gehäuse ab.

In einer dritten Stellung des Steuerelements 20 (vgl. Fig. 3(b)), in der es den ersten und zweiten Anschluss 11, 12 nicht absperrt, stützt das Steuerelement 20 die beiden Dichtungen 1, 2 gegen das Gehäuse ab.

Das Steuerelement 20 verbindet in der ersten Stellung (vgl. Fig. 3(a)) die Anschlüsse 12 und 13 über eine Durchgangsöffnung mit einem seitlichen Schlitz 23 und sperrt den zweiten Anschluss 12 in der zweiten Stellung des Steuerelements (vgl. Fig. 3(c)) ab.

In der zweiten Stellung (vgl. Fig. 3(c)) verbindet das Steuerelement 20 die Anschlüsse 11 und 13 über die Durchgangsöffnung mit dem seitlichen Schlitz 23 und sperrt den ersten Anschluss 11 in der ersten Stellung des Steuerelements (vgl. Fig. 3(a)) ab.

In der dritten Stellung (vgl. Fig. 3(b)) verbindet das Steuerelement 20 die Anschlüsse 11, 12 und 13 über die Durchgangsöffnung mit dem seitlichen Schlitz 23. Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Mehrwegeventil, insbesondere Kühlwasser-Ventil für ein Kraftfahrzeug, aufweisend:
ein Gehäuse (10, 14) mit wenigstens zwei Anschlüssen (11-13);
ein Steuerelement (20) zum Sperren wenigstens eines der Anschlüsse, das drehbar in einer Aussparung (15) des Gehäuses angeordnet ist;
wobei eine Außenkontur des Steuerelements (20) einen Kompressionsabschnitt (21) aufweist, der in wenigstens einer ersten Stellung des Steuerelements (20) eine erste Dichtung (1) komprimiert, die an einem ersten (11) der Anschlüsse angeordnet ist;
wobei die Außenkontur des Steuerelements (20) einen Dekompressionsabschnitt (22) aufweist, der einen kleineren Radius aufweist als der Kompressionsabschnitt (21) und in wenigstens einer weiteren Stellung des Steuerelements (20) der ersten Dichtung (1) gegenüberliegt, so dass das Steuerelement (20) die erste Dichtung (1) weniger komprimiert als in der ersten Stellung,
wobei das Steuerelement (20) in der ersten Stellung den ersten Anschluss (11) absperrt,
wobei der Kompressionsabschnitt (21) in wenigstens einer zweiten Stellung des Steuerelements (20) eine zweite Dichtung (2) komprimiert, die an einem zweiten (12) der Anschlüsse angeordnet ist,
wobei zwischen dem ersten und zweiten Anschluss (11, 12) wenigstens ein weiterer (13) der Anschlüsse angeordnet ist und/oder
das Steuerelement (20) die zweite Dichtung (2) in der zweiten Stellung des Steuerelements (20) stärker komprimiert als in der ersten Stellung des Steuerelements (20) sowie den zweiten Anschluss (12) in der zweiten Stellung absperrt und/oder in der ersten Stellung nicht absperrt,
wobei der Dekompressionsabschnitt (22) in dieser weiteren Stellung des Steuerelements (20) die erste Dichtung (1) gegen das Gehäuse abstützt,
wobei das Steuerelement (20) in wenigstens einer Stellung wenigstens zwei der Anschlüsse (11-13) über eine geschlitzte Durchgangspassage (23) des Steuerelements verbindet und wenigstens einen dieser Anschlüsse (11-13) in wenigstens einer anderen Stellung des Steuerelements (20) absperrt, und der Schlitz der Durchgangspassage (23) wenigstens teilweise in dem Dekompressionsabschnitt (22) angeordnet ist.

2. Mehrwegeventil nach Anspruch 1, wobei das Steuerelement (20) in dieser weiteren Stellung den ersten Anschluss (11) nicht absperrt und/oder wobei der Dekompressionsabschnitt (22) in dieser weiteren Stellung des Steuerelements (20) die erste Dichtung (1) nicht komprimiert.

3. Mehrwegeventil nach einem der vorhergehenden Ansprüche, wobei der Dekompressionsabschnitt (22) in der ersten Stellung des Steuerelements (20) die zweite Dichtung (2) gegen das Gehäuse abstützt und/oder nicht komprimiert.

4. Mehrwegeventil nach einem der vorhergehenden Ansprüche, wobei das Steuerelement (20) in wenigstens einer dritten Stellung des Steuerelements (20), insbesondere in wenigstens einer dritten Stellung des Steuerelements (20), in der dieses den ersten und zweiten Anschluss (11, 12) nicht absperrt, die erste Dichtung (1) weniger komprimiert als in der ersten Stellung, die zweite Dichtung (2) weniger komprimiert als in der zweiten Stellung und/oder die erste und/oder zweite Dichtung (1, 2) gegen das Gehäuse abstützt.

5. Mehrwegeventil nach einem der vorhergehenden Ansprüche, wobei das Steuerelement (20) in wenigstens einer Stellung wenigstens drei der Anschlüsse (11-13) über die Durchgangspassage (23) verbindet.

6. Mehrwegeventil nach einem der vorhergehenden Ansprüche, wobei Kompressionsabschnitt (21) und Dekompressionsabschnitt (22) stetig ineinander übergehen.

7. Mehrwegeventil nach dem vorhergehenden Anspruch, wobei die erste und/oder zweite Dichtung (1, 2) mehrteilig und/oder ringartig ausgebildet ist.

8. Kraftfahrzeug mit wenigstens einem Mehrwegeventil, insbesondere Kühlwasser-Ventil, nach einem der vorhergehenden Ansprüche.

9. Verfahren zum Betätigen eines Mehrwegeventils nach einem der vorhergehenden Ansprüche, wobei das Steuerelement (20) zwischen der ersten Stellung, in der der Kompressionsabschnitt (21) die erste Dichtung (1) komprimiert, und einer weiteren Stellung verstellt wird, in der der Dekompressionsabschnitt (22) der ersten Dichtung (1) gegenüberliegt, so dass das Steuerelement (20) die erste Dichtung (1) weniger komprimiert als in der ersten Stellung.

## Claims

1. Multi-port valve, in particular cooling water valve for a motor vehicle, having:
a housing (10, 14) having at least two connectors (11-13);
a control element (20) which for blocking at least one of the connectors is disposed so as to be rotatable in a recess (15) of the housing;
wherein an external contour of the control element (20) has a compression portion (21) which in at least one first position of the control element (20) compresses a first seal (1) which is disposed on a first (11) one of the connectors;
wherein the external contour of the control element (20) has a decompression portion (22) which has a smaller radius than the compression portion (21), and in at least one further position of the control element (20) lies opposite the first seal (1) such that the control element (20) compresses the first seal (1) less than in the first position;
wherein the control element (20) in the first position blocks the first connector (11);
wherein the compression portion (21) in at least one second position of the control element (20) compresses a second seal (2) which is disposed on a second (12) one of the connectors;
wherein at least one further (13) one of the connectors is disposed between the first and the second connector (11, 12); and/or
the control element (20) in the second position of the control element (20) compresses the second seal (2) more than in the first position of the control element (20), and in the second position blocks and/or in the first position does not block the second connector (12);
wherein the decompression portion (22) in this further position of the control element (20) supports the first seal (1) in relation to the housing;
wherein the control element (20) in at least one position, by way of a slotted through passage (23) of the control element, connects at least two of the connectors (11-13), and in at least one other position of the control element (20) blocks at least one of these connectors (11-13), and the slot of the through passage (23) is at least partially disposed in the decompression portion (22).

2. Multi-port valve according to Claim 1, wherein the control element (20) in this further position does not block the first connector (11), and/or wherein the decompression portion (22) in this further position of the control element (20) does not compress the first seal (1).

3. Multi-port valve according to one of the preceding claims, wherein the decompression portion (22) in the first position of the control element (20) supports the second seal (2) in relation to the housing and/or does not compress the second seal (2) .

4. Multi-port valve according to one of the preceding claims, wherein the control element (20) in at least one third position of the control element (20), in particular in at least one third position of the control element (20) in which the latter does not block the first and the second connector (11, 12), compresses the first seal (1) less than in the first position, compresses the second seal (2) less than in the second position and/or supports the first and/or the second seal (1, 2) in relation to the housing.

5. Multi-port valve according to one of the preceding claims, wherein the control element (20) in at least one position, by way of the through passage (23), connects at least three of the connectors (11-13).

6. Multi-port valve according to one of the preceding claims, wherein the compression portion (21) and the decompression portion (22) continually transition into one another.

7. Multi-port valve according to the preceding claim, wherein the first and/or the second seal (1, 2) are/is configured in multiple parts and/or so as to be annular.

8. Motor vehicle having at least one multi-port valve, in particular cooling water valve, according to one of the preceding claims.

9. Method for activating a multi-port valve according to one of the preceding claims, wherein the control element (20) is adjusted between the first position in which the compression portion (21) compresses the first seal (1), and a further position in which the decompression portion (22) lies opposite the first seal (1) such that the control element (20) compresses the first seal (1) less than in the first position.

## Revendications

1. Vanne multivoies, notamment vanne d'eau de refroidissement destinée à un véhicule automobile, ladite vanne comportant :
un boîtier (10, 14) pourvu d'au moins deux raccords (11-13);
un élément de commande (20) qui est destiné à bloquer au moins un des raccords et qui est disposé de manière rotative dans un évidement (15) du boîtier ;
un contour extérieur de l'élément de commande (20) comportant une portion de compression (21) qui, dans au moins une première position de l'élément de commande (20), comprime une première garniture d'étanchéité (1) qui est disposée au niveau d'un premier (11) des raccords ;
le contour extérieur de l'élément de commande (20) comportant une portion de décompression (22) dont le rayon est plus petit que la portion de compression (21) et qui est opposée à la première garniture d'étanchéité (1) dans au moins une autre position de l'élément de commande (20) de sorte que l'élément de commande (20) de la première garniture d'étanchéité (1) soit moins comprimé que dans la première position,
l'élément de commande (20) bloquant le premier raccord (11) dans la première position,
dans au moins une deuxième position de l'élément de commande (20), la portion de compression (21) comprimant une deuxième garniture d'étanchéité (2) qui est disposée au niveau d'un deuxième (12) des raccords, au moins un autre (13) des raccords étant disposé entre le premier et le deuxième raccord (11, 12) et/ou
l'élément de commande (20) comprimant plus fortement la deuxième garniture d'étanchéité (2) dans la deuxième position de l'élément de commande (20) que dans la première position de l'élément de commande (20) et bloquant le deuxième raccord (12) dans la deuxième position et/ou ne le bloquant pas dans la première position,
la portion de décompression (22) appuyant la première garniture d'étanchéité (1) contre le boîtier dans cette autre position de l'élément de commande (20),
l'élément de commande (20) reliant dans au moins une position au moins deux des raccords (11 -13) par le biais d'un passage traversant fendu (23) de l'élément de commande et bloquant au moins un de ces raccords (11-13) dans au moins une autre position de l'élément de commande (20), et la fente du passage traversant (23) étant disposée au moins partiellement dans la portion de décompression (22).

2. Vanne multivoies selon la revendication 1, l'élément de commande (20) ne bloquant pas le premier raccord (11) dans cette autre position et/ou la portion de décompression (22) ne comprimant pas la première garniture d'étanchéité (1) dans cette autre position de l'élément de commande (20).

3. Vanne multivoies selon l'une des revendications précédentes, la portion de décompression (22) appuyant la deuxième garniture (2) contre le boîtier, et/ou ne la comprimant pas, dans la première position de l'élément de commande (20).

4. Vanne multivoies selon l'une des revendications précédentes, dans au moins une troisième position de l'élément de commande (20), notamment dans au moins une troisième position de l'élément de commande (20) dans laquelle celui-ci ne bloque pas le premier et le deuxième raccord (11, 12), l'élément de commande (20) comprimant moins la première garniture d'étanchéité (1) que dans la première position, comprimant moins la deuxième garniture d'étanchéité (2) que dans la deuxième position et/ou appuyant la première et/ou la deuxième garniture d'étanchéité (1, 2) contre le boîtier.

5. Vanne multivoies selon l'une des revendications précédentes, l'élément de commande (20) reliant au moins trois des raccords (11-13) par le biais du passage traversant (23) dans au moins une position.

6. Vanne multivoies selon l'une des revendications précédentes, la portion de compression (21) et la portion de décompression (22) se transformant l'une en l'autre de manière continue.

7. Vanne multivoies selon la revendication précédente, la première et/ou la deuxième garniture d'étanchéité (1, 2) étant réalisées en plusieurs parties et/ou sous forme annulaire.

8. Véhicule automobile comprenant au moins une vanne multivoies, notamment une vanne d'eau de refroidissement, selon l'une des revendications précédentes.

9. Procédé d'actionnement d'une vanne multivoies selon l'une des revendications précédentes, l'élément de commande (20) étant déplacé entre la première position, dans laquelle la portion de compression (21) comprime la première garniture d'étanchéité (1), et une autre position dans laquelle la portion de décompression (22) fait face à la première garniture d'étanchéité (1) de sorte que l'élément de commande (20) comprime moins la première garniture d'étanchéité (1) que dans la première position.
